# EUROPEAN PATENT APPLICATION

(11) **EP 2 708 134 A1**
(43) Date of publication of application: **19.03.2014**
(21) Application number: 12184623.2
(22) Date of filing: 17.09.2012
(51) Int. Cl.: A21D 2/18, A21D 13/08, A21D 10/00, A23D 9/007, A23L 1/0534

(54) **Dough compositions comprising a structured fat phase**

(71) Applicant: Unilever N.V., 3013 AL Rotterdam (NL)
(72) Inventor: Edara, Varun, 3133 AT Vlaardingen (NL); van Malssen, Kees Frederik, 3133 AT Vlaardingen (NL); Pelan, Edward George, 3133 AT Vlaardingen (NL); Stoayanov, Simeon Dobrev, 3133 AT Vlaardingen (NL)
(74) Representative: Wurfbain, Gilles L.

(57) **Abstract**

The present invention relates to a dough composition comprising 1 to 95 % by weight of flour and further comprising a fat phase, wherein the fat phase is structured by a sheet-like particulate comprising a polymer. The invention further relates to bakery products made thereof.

## Description

The present invention relates to a dough and bakery compositions comprising a fat phase, which is structured by sheet-like particles comprising polymer.

### BACKGROUND OF THE INVENTION

The structure and morphology of a consumer product is essential for the properties and the appreciation of the product. For example, bakery products like e.g. cookies and cakes generally require a certain amount of fat to achieve product properties like moistness and crispness. Also, the dough that is used to prepare such bakery products may benefit from the presence of fat as this e.g. may influence handling properties like firmness and kneadability. Most bakery products require a certain amount of saturated fat (i.e. fat having a certain amount of saturated fatty acids) to get the desired product properties.

It is known that thickeners and fibres can be used to create useful structures in foods. Numerous fibrous materials have been described, and several methods have been disclosed to produce fibrous materials. The production of fibres out of vegetable or dairy proteins has been described in order to use these fibres as meat replacers.

WO 2006/007393 A1 and US 2010/0247908 A1 disclose a method to produce fibres using liquid-liquid dispersion in a shear field.

WO 2007/068344 A1 discloses a surface-active fibrous material used to stabilise gas bubbles in a food product.

US 4,287,219 discloses fibres made from proteins, with a fat containing phase in the core of the fibrous materials. These are used as meat replacers.

Wege et al. (Langmuir 2008, 24, 9245-9253) disclose stabilisation of foams and emulsions with microparticles from hydrophobic cellulose. They produce microparticles in various structures made from hypromellose phthalate (which is hydroxypropyl methylcellulose phthalate), in a stirred vessel using a high shear mixer. This polymer is soluble in water, dependent on the pH: at low pH it is not soluble, while upon increase of pH to above 5.5 the polymer becomes soluble.

EP12179896 is a pre-publication document relating to sheet-like particulate comprising a lipophilic cellulose-based polymer.

### SUMMARY OF THE INVENTION

In spite of these disclosures, there still is a need to produce new compositions containing a fat phase that is structured by lipophilic materials. This is required to develop food products like for example bakery products, which are healthy and/or have beneficial sensory benefits. These fat phases may be incorporated as ingredients of products such as dough compositions and bakery products.

It was surprisingly found that one or more of these objectives can be met by use of a fat phase which is structured by particulates of a specific sheet-like shape and size comprising a lipophilic cellulose-based polymer.

Using these sheet-like particulates has the advantage that in case of structuring food products, less saturated fats are required to structure the food product. Nevertheless similar (or even improved) sensory and in-use physical properties can be achieved, like moistness, crispness, rheology, spreadability, firmness, kneadability and storage stability. Reducing the amounts of saturated fat in a product makes a food product healthier.

Accordingly the invention relates to dough compositions comprising from 1 to 95% by weight of flour and further comprising a fat phase and a sheet-like particulate comprising a lipophilic cellulose-based polymer, wherein the sheet-like particulate has a thickness z ranging from 0.1 to 2 micrometer, and a length y ranging from 20 micrometer to 2,000 micrometer, measured along the longest coplanar axis, and a width x ranging from 10 micrometer to 500 micrometer, measured perpendicular to the direction of the length y coplanar with the sheet-like particulate plane.

The invention further relates to a bakery product comprising a dough composition according to the invention.

The invention also relates to a method for production of a bakery product comprising flour, fat and a sheet-like particulate comprising a lipophilic cellulose-based polymer comprising the steps:
a) providing sheet-like particulate comprising a lipophilic cellulose-based polymer, wherein the sheet-like particulate has a thickness z ranging from 0.1 to 2 micrometer,
   and a length y ranging from 20 micrometer to 2,000 micrometer, measured along the longest coplanar axis, and a width x ranging from 10 micrometer to 500 micrometer, measured perpendicular to the direction of the length y coplanar with the sheet-like particulate plane; and
b) dispersing the particular provided at step a) in a fat phase; and
c) bringing the mixture obtained from step b) into contact with one or more other ingredients of the bakery product.

The invention also relates to the use of a composition according to the invention to prepare a bakery product.

### DETAILED DESCRIPTION

### Definitions

Unless defined otherwise, all technical and scientific terms used herein have the same meaning as commonly understood by one of ordinary skill in the art. All percentages, unless otherwise stated, refer to the percentage by weight. The abbreviation 'wt%' refers to percentage by weight. In case a range is given, the given range includes the mentioned endpoints. The terms 'fat' and 'oil' are used interchangeably. Where applicable the prefix 'liquid' or 'solid' is added to indicate if the fat or oil is liquid or solid at ambient temperature as understood by the person skilled in the art. The term 'structuring fat' refers to a fat that is solid at ambient temperature. Ambient temperature is a temperature of about 20 degrees Celsius.

By the term 'sheet-like particulate', we mean an anisotropic water-insoluble structure of which one dimension is small, relative to the other two dimensions. This can be translated into that the sheet-like particulate is a thin sheet of solid material of a continuous material. The sheet-like particulate may be a regularly or irregularly shaped flat sheet (compare to a paper sheet or a plastic bag), or may be in the form of any regularly or irregularly shaped morphology (compare to a crumbled paper sheet or plastic bag). A sheet-like particulate which would be in a similar shape as a flat paper sheet or as a crumbled paper sheet is considered to be a sheet-like particulate in the context of the present invention.

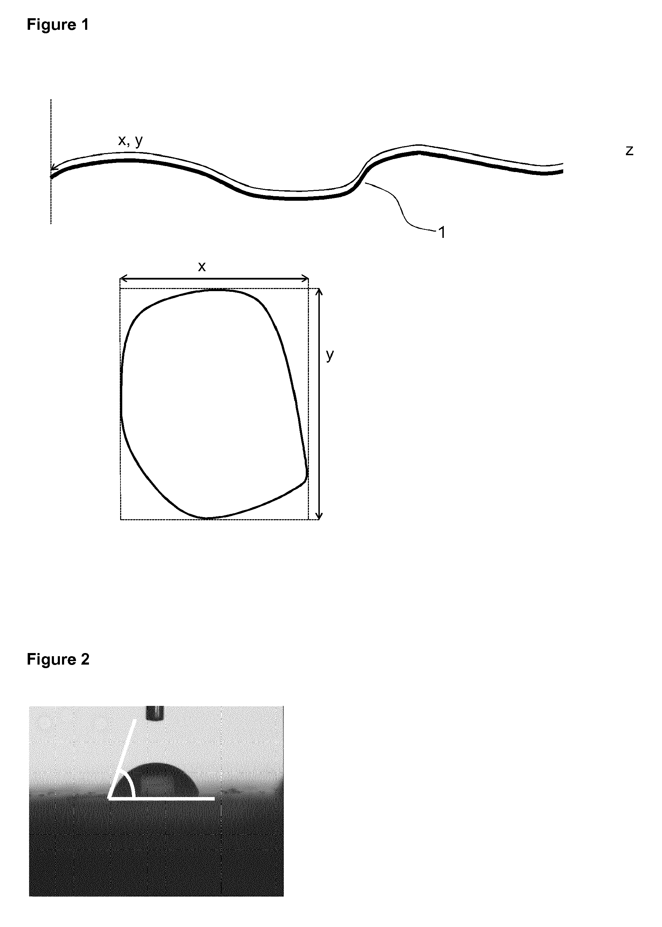

In the context of the present invention the dimensions of the sheet-like particulate are defined as having a width x, a length y, and a thickness z. The length y of the sheet-like particulate is typically measured along the longest coplanar axis, from one end to other end of the sheet-like particulate. The width x of the sheet-like particulate typically would be perpendicular to the direction of the length coplanar with sheet-like particulate plane. The thickness of the sheet-like particulates is defined as the distance between the two flat surfaces of the formed sheets-like particulates. The meaning of thickness z, length y and width x are illustrated in Figure 1. Typically the surface area to volume ratio is defined as ratio of the surface area of the sheet (two sides combined) to the volume of the particle.

In the present context, the contact angle is measured as the angle in the oil droplet, as schematically depicted in Figure 2.

### Edible compositions comprising fat phase structured by sheet-like particulate

The advantage of using the sheet-like particulate according to the invention is that the amount of saturated triglycerides that is required to structure a food product can be reduced, which leads to a healthier triglyceride profile of foods containing such structured lipid phase.

It has also been found that using the sheet-like particulate according to the invention in bakery products the amount of saturated fat may be reduced while maintaining at least part of bakery product required product properties like moisture (of e.g. cakes) and crispness / crunch (of e.g. cookies).

Further, it has been found that using the sheet-like particulate according to the invention in dough compositions, like e.g. cookie dough or cake batter, results in improved product properties like kneadability, shape retention and little or no oil leaking from the dough.

### Dough making and properties thereof

The quality of dough can be classified by looking at the dough properties. For example a cookie made from a traditional recipe with flour, eggs, sugar and sheet-like particulate structured edible oil will maintain shape during baking as good or better than from a dough made with butter. Such cookies will form much better than one where the butter is replaced by liquid edible oil.

The dough quality can be characterised by means of rheology. Cakes made with oil rather than butter will be soggy and fluffy, whereas edible oil structured by the sheet-like particulate will have a firmness comparable or better than butter, despite having a much lower saturated fat content.

Making of the bakery dough with butter can be hard work in order to get the butter sufficiently liquefied. Replacing the butter by plain edible oil will result in a dough from which oil will leak. Sheet-like particulate structured edible oil will have the ease of working with oil, whilst the dough will have the quality of the butter dough.

Therefore, the invention also relates to dough composition comprising flour, fat phase and a sheet-like particulate comprising a lipophilic cellulose-based polymer, wherein the sheet-like particulate has a thickness z ranging from 0.1 to 2 micrometer, and a length y ranging from 20 micrometer to 2,000 micrometer, measured along the longest coplanar axis, and a width x ranging from 10 micrometer to 500 micrometer, measured perpendicular to the direction of the length y coplanar with the sheet-like particulate plane.

The dough composition of the invention comprises from 1 to 95 % by weight of flour and preferably from 5 to 95 % by weight.

Preferably the dough composition of the invention comprises 5 to 70% by weight of flour, 5 to 60% by weight of fat, and 0.01 to 50% by weight of fat phase of sheet-like particulate material. Preferably the composition further comprises 1 to 40% by weight of water.

It will be appreciated that the applicable amounts will depend on the type of bakery product the dough composition is used for. Such recipes are known to the skilled person. For example, a cookie dough will typically contain 30 to 60 wt% flour, 20 to 50 wt% fat and less than 10 wt% water. A sponge cake batter typically contains 10 to 40 wt% flour, 10 to 40 wt% fat and 10 to 30 wt% water.

Therefore the invention further relates to bakery product comprising a dough composition according to the invention and more preferably wherein the bakery product is a cookie, sponge cake, cup cake, biscuit, brownie, pastry or short bread type bakery product.

The bakery product may comprise further ingredients like sugar, salt and emulsifiers. Typically the amount of sugar is from 0 to 50 wt%, like for example 5 to 40wt% or 10 to 30 wt%. Typical amounts of salt are between 0 and 10 wt%, like for example between 1 and 8 wt%, 2 and 6 wt% and 3 and 5 wt%. It will be appreciated that e.g. a savoury bakery product like e.g. a savoury biscuit will contain no or at least a low amount of sugar like e.g. between 0.01 and 2 wt%. On the other hand, salt is often used in sweet bakery products to enhance the overall taste impression and typically an amount of between 0.05 and 1 wt% of salt is used in addition to sugar.

The invention also relates to the use of compositions according the invention to prepare a bakery product, preferably a bakery product comprising less than 25% by weight of saturated fatty acid, preferably less than 20% by weight and more preferably less than 15% by weight on total product. Typically the amount of saturated fatty acid is between 1 and 25 wt%, like for example between 5 and 20 wt% or 10 and 15 wt%.

It was further observed that a bakery product comprising a fat-phase structured by the sheet-like particulate may have improved organoleptic properties, such as an improved hardness.

Preferably the concentration of sheet-like particulate comprised by edible compositions of the invention is between 0.01% and 50% by weight, preferably between 0.1% and 40% by weight, more preferably between 0.2% and 25% by weight, still more preferably between 0.5% and 10% by weight, based on the amount of total fat.

The sheet-like particulates lead to structuring of the fat phase. By rheology measurements it can be shown that the physical behaviour of the structured lipids is such that it resembles lipid phases that are structured by solid triglycerides (for example like in butter and margarine), for example in meltdown behaviour upon increase of temperature. Also extended temperature stability can be obtained. Also the viscosity (in Pa.s) of a structured fat phase can be determined as function of the shear rate (in 1/s) in order to compare for example a margarine (structured by solid (saturated) fat crystals) and structured fat phase.

Preferably the edible composition according to the invention is not aerated product and more preferably is no aerated aqueous product.

### Fat phase

By using sheet-like particulates of the invention for structuring, applying shear to the structured fat phase leads to shear alignment. This means that under shear forces the sheet-like particulates can align, and therewith give the impression to the consumer that a solid-liquid transition is obtained. This can be perceived to be analogous to a melting curve of a solid fat which melts upon chewing in the mouth, and gives a positive impression to the consumer. Therefore using these sheet-like particulates has the advantage that in case of structuring food products, less saturated fats are required to structure the food product. Nevertheless similar (or even improved) sensory and in-use physical properties can be achieved, like moistness, crispness, rheology, spreadability, firmness, kneadability and storage stability. Reducing the amounts of saturated fat in a product makes a food product healthier.

The fat phase comprised by the edible compositions according to the invention may comprise liquid oil (i.e. fat that is liquid at ambient temperature) hardstock fat (i.e. fat which is solid at ambient temperature) and mixtures thereof.

Preferably the fat phase is selected from the group consisting of oil of vegetable origin, oil of dairy origin, oil of marine origin, oil of algae origin and mixtures thereof. Preferred oils of vegetable origin include soybean oil, sunflower oil, linseed oil, low erucic rapeseed oil (Canola), corn oil (maize oil), olive oil, palm oil, palm kernel oil, allanblackia fat. Preferred oils of dairy origin include milk fat such as butter or butter oil and more preferably are obtained from cow milk.

The fat phase may also contain other animal oils like lard and tallow, but preferably this is less than 15 wt%, preferably less than 10 wt%, more preferably less than 5 wt%, even more preferably less than 1 wt%, based on total fat, and still even more preferably essentially absent.

Preferably at least 50 wt%, based on total fat, is of vegetable origin, more preferably at least 60 wt%, even more preferably at least 70 wt%, still more preferably at least 80 wt%, even still more preferably at least 90 wt% and even still more further preferably at least 95 wt%. Most preferably the fat phase essentially consists of fat of vegetable origin.

Preferably the fat phase comprised by the edible composition according to the invention comprises less than 50 wt%, based on total fat, of saturated fatty acids, more preferably less than 40 wt%, even more preferably less than 30 wt%, still more preferably less than 20 wt% and still even more preferably less than 10 wt%. For example the fat phase may comprise 0 to 55 wt%, 5 to 45 wt%, 8 to 35 wt% or 10 to 25 wt% of saturated fatty acids.

(Natural) oils and fats may be modified by hydrogenation, fractionation, interesterification or by a combination of these steps to improve their ability to structure a fat phase.

Hydrogenation alters the degree of unsaturation of the fatty acids and as such alters the fatty acid composition. This allows e.g. plastic fats to be made from liquid oils. A drawback of especially partial hydrogenation is the formation of by-products like e.g. trans fatty acids.

Interesterification retains the fatty acid composition but alters the distribution of the fatty acids over the glycerol backbones. Interesterification can be done chemically or with the aid of enzymes. Usually a mixture of two different fats, that by themselves are not or less suitable as a structuring fat, is subjected to interesterification. The resulting interesterified fat will have improved structuring properties compared to the starting materials. A drawback of interesterification may be the formation of by-products like e.g. free fatty acids and diglycerides. Also enzymatic interesterification introduces additional process steps which may be complicated and introduce additional costs. Furthermore some consumers perceive chemically modified fats as unnatural and therefore undesirable.

By use of the sheet-like particulate according to the invention, some fat phases comprising oils and fats which otherwise would not be suitable to structure compositions comprising a fat-phase, may become suitable as fat phase. Therefore, use of the sheet-like particulate according to the invention may reduce or omit the need for hydrogenation, fractionation and/or interesterification of oils and fats and, in particular increase the usage of natural oils and fats.

Preferably the fat phase comprises at least 50 wt%, based on total fat, more preferably at least 75 wt%, even more preferably at least 95 wt%, of one or more natural fats; and still even more preferably essentially consists of one or more natural fats. For the purpose of this invention, fats which have undergone interesterification and/or hydrogenation are not considered natural fats.

The fat phase may also comprise other compounds, such as diglycerides, monoglycerides and free fatty acids. Also compounds like lecithin, other emulsifiers, phytosterols, phytostanols, waxes, colourants like carotenoids, vitamins like vitamin A, D, E, and K, and antioxidants like the tocopherols (vitamin E) may be present in a natural oil.

### Sheet like particulate comprising a lipophilic cellulose-based polymer

The sheet-like particulate concerns sheet-like particulate as described herein including any one of the preferred materials and methods of making them.

Preferably the concentration of sheet-like particulate comprised by edible compositions of the invention is between 0.01 % and 50% by weight, preferably between 0.1 % and 40% by weight, more preferably between 0.2% and 25% by weight, still more preferably between 0.5% and 10% by weight, based on the amount of total fat.

In order to achieve good structuring capacity, the sheet-like particulate should have a good compatibility or adhesion to a fat phase. A poor compatibility causes agglomeration of the sheet-like particulates and weak interaction with the fat phase, which may induce a reduction of mechanical properties. The preferential route is to use the sheet-like particulates that are compatible with the fat phase, which are either made from appropriate materials or modified chemically of physically during the process of their production.

The compatibility between sheet-like particulate and fat phase can be estimated by measuring the wetting of the sheet-like particulate by the fat phase. Measure for this is the three phase contact angle of the fat phase or water droplet in air placed on the substrate made from the same material the sheet-like particulates are made from. Alternatively the contact angle of fat phase in water (or other way around) on the substrate can be measured as well. Here the implicit assumption is that both sheet-like particulate and substrate have comparable surface roughness and that line tension effects can be neglected. A better fat phase wetting (or poorer water wetting) are indicative of better compatibility between the sheet-like particulate and the fat phase. Therefore one can convert the problem of compatibility between the sheet-like particulate and fat phase to a problem of preparing sheet-like particulates with optimal lipophilicity measured via the contact angle.

Here we define the lipophilic cellulose-based polymer as a compound that is derived from cellulose, which preferably has a three-phase contact angle between sunflower oil, and a film of the lipophilic cellulose-based polymer, and air of less than 70° at 20°C. Preferably the angle is less than 50°, most preferred less than 40°.

In the present context, the contact angle is measured as the angle in the droplet, as schematically depicted in Figure 1.

The contact angle can be measured using standard equipment like the Drop shape analysis DSA100 (Kruss GmbH, Neunkirchen am Brand, Germany). This technique is common in the art.

The lipophilic cellulose-based polymer can be considered to be a cellulose derivative. A cellulose derivative is defined to be a compound that is based on cellulose, and wherein the cellulose has been modified by a chemical reaction. Preferably the lipophilic cellulose-based polymer comprises an alkylated cellulose ether and more preferably an alkylated cellulose ether selected form the list consisting of methyl-ethylcellulose, ethylcellulose, propylcellulose, butylcellulose and combinations thereof. Another preferred lipophilic cellulose-based polymer is cellulose diacetate. Also combinations of these compounds are within the scope of the present invention. More preferably the lipophilic cellulose-based polymer comprises an alkylated cellulose ether which is ethylcellulose.

The general structural formula of ethylcellulose is:

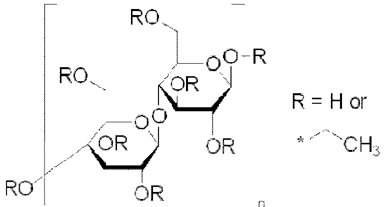

The degree of substitution of the ethylcellulose preferably used in the present invention is preferably from 2 to 3, preferably from 2.4 to 2.6, more preferably about 2.5. The average number of hydroxyl groups substituted per anhydroglucose unit (the 'monomer') is known as the 'degree of substitution' (DS). If all three hydroxyls are replaced, the maximum theoretical DS of 3 results.

Suitable sources and types of the ethylcellulose preferably used in the present invention are supplied by for example Ashland (formerly Hercules), Aldrich, and Dow Chemicals. Suitable ethylcellulose preferably has a viscosity ranging from 5 to 300 mPa.s at a concentration of 5% in toluenelethanol 80:20, more preferably from 100 to 300 mPa.s at these conditions.

Preferably, the dimensions of the sheet-like particulate is such that the thickness of the sheet-like particulates ranges from 0.1 to 1.8 micrometer, preferably from 0.1 to 1.6 micrometer. Preferably the length y ranges from 20 to 1,500 micrometer, more preferred from 50 to 1,000 micrometer. Preferably the width x ranges from 20 to 300 micrometer, more preferred from 20 to 280 micrometer.

Most preferred, the thickness z of the sheet-like particulates ranges from 0.2 to 1.5 micrometer, and/or the length y ranges from 100 micrometer to 600 micrometer, and/or the width x ranges from 50 micrometer to 250 micrometer.

Some of the properties of the sheet-like particulates may be influenced by the zeta-potential of the sheet-like particulates. The zeta-potential is a measure for the surface charge of a colloidal particle, and determines whether particles attract or repulse each other. At a relatively high absolute value of the zeta-potential the ethylcellulose particles are well dispersed, due to repulsion of the particles. Preferably the absolute zeta-potential of the sheet-like particulates is more than 25 millivolt. The zeta potential values are measured as described in Jin et al., Super stable foams stabilized by colloidal ethyl cellulose particles. 2012 Soft Matter, vol. 8, pp. 2194-2205.

### Method for preparation of sheet-like particulate

A suitable method for preparation of a sheet-like particulate according to the invention comprises the following steps:
a) dissolving the lipophilic cellulose-based polymer in an organic solvent, preferably ethanol or acetone, preferably at a concentration between 5 and 17.5% by weight;
b) providing a dispersion medium comprising a second solvent, preferably water, wherein the organic solvent and the second solvent are miscible or partially soluble in each other, and wherein the lipophilic cellulose-based polymer is insoluble in the second solvent;
c) adding the solution from step a) to the dispersion medium from step b); while subjecting this mixture to shear by transporting the dispersion through a gap between two confronting surfaces,
   wherein the surfaces are spaced at a distance ranging from 100 to 500 micrometer, wherein the shear rate in the gap ranges from 5x10³ s⁻¹ to 1x10⁵ s⁻¹; and
d) optionally isolating and/or drying of the sheet-like particulate obtained from step c).

In step a) the organic solvent in the method according to the invention is a solvent in which the lipophilic cellulose-based polymer can be dissolved. Examples of these solvents are alcohols, preferably ethanol, ethyl acetate, acetic acid, acetone, *N,N-*dimethylformamide (DMF), or any suitable combination of these solvents. Preferred organic solvents are the common solvents acetone or ethanol. The concentration of the lipophilic cellulose-based polymer in the solvent preferably ranges from 5% to 17.5% by weight, preferably from 5% to 15% by weight, more preferred from 5% to 12.5% by weight, most preferred from 7.5% to 12.5% by weight. Preferably the temperature in this step ranges from 10 to 60°C, more preferred from 15 to 40°C. Most preferred the temperature ranges from 20 to 25°C. Preferably the lipophilic cellulose-based polymer is homogeneously dissolved in the solvent in step a). Preferably the organic solvent used at step a) is a food grade solvent.

In step b) the second solvent preferably is water. The preferred lipophilic cellulose-based polymer is ethylcellulose, and this ethylcellulose is not soluble in the preferred second solvent water. Preferably the volume of the dispersion medium in step b) ranges from 10 to 200 times the volume of the solvent with dissolved lipophilic cellulose-based polymer from step a), more preferred the volume of the dispersion medium ranges from 50 to 150 times the volume of the solvent with dissolved lipophilic cellulose-based polymer from step a). Preferably the temperature in this step ranges from 10 to 60°C, more preferred from 15 to 40°C. Most preferred the temperature ranges from 20 to 25°C. Preferably the second solvent used at step b) is a food grade solvent.

In step c) by adding the solution from step b) to the solution from step a), a dispersed phase of the lipophilic cellulose-based polymer within the dispersion medium is formed. In step c) the dispersion is subjected to shear by transporting the liquid mixture through a gap between two confronting surfaces. The gap between these confronting surfaces ranges from 100 to 500 micrometer. The shear rate ranges from 5x10³ to 1x10⁵ s⁻¹, more preferred from 7x10³ to 8x10⁴ s⁻¹. Preferably the temperature in this step ranges from 10 to 60°C, more preferred from 15 to 40°C. Most preferred the temperature ranges from 20 to 25°C. The temperature of the mixture may rise due to the extensive mixing process and the energy input into the mixing operation.

Preferably the gap in step c) is formed by an annular space between two concentric cylinders, wherein at least one of the cylinders rotates relative to the other cylinder, preferably at a rotation speed ranging from 10,000 to 30,000 rpm. Preferably the rotation speed ranges from 15,000 to 25,000 rpm. Typically the internal cylinder is able to rotate, and this inner cylinder is usually called the rotor (and the outside cylinder the stator). Preferably the cylinders are conically shaped, while the gap between the two surfaces preferably remains constant. The flow of liquid from step c) in that case is from the wide bottom of the cone to the narrow top of the cone, meaning that the cross-sectional area of the flow path decreases in the direction of the flow.

A device that may be used to perform the method of the invention is a colloidal mill - high shear mixer IKA mill with rotor-stator design (supplier IKA®-Werke GmbH & Co. KG, Staufen, Germany). Rotor-stator mills typically operate at high rotational speeds of the rotor. The differential speed between the rotor and the stator imparts high shear and turbulent flow in the gap between the rotor and the stator. The shear rate in the gap between the rotor and the stator may be varied from 5x10³ s⁻¹ to 1x10⁵ s⁻¹, more preferred from 7x10³ to 8x10⁴ s⁻¹. The Reynolds number (Re) that gives a measure of the ratio of the inertial forces to the viscous forces in that case may range from 3x10⁴ to 3x10⁵, more preferred from 3.2x10⁴ to 2.5x10⁵.

One of the advantages of the method of the invention for preparation of sheet-like particulates is its simplicity and easy scalability. As a whole, it can be used for synthesizing large amounts of sheet-like particulates in an inexpensive way using basic laboratory equipment such as colloidal mill and eco-friendly medium such as water. The anisotropic sheet-like particulates are synthesized in solution in a dispersed state and can be used directly.

If necessary, sheet-like particulates can be easily separated and dried or transferred to another medium using wide spread procedures as centrifugation and filtration. Hence in step d) the sheet-like particulate material obtained in step c) optionally is isolated and/or dried. Drying may be done like (over) air drying, (vacuum) drum drying, microwave (vacuum) drying, and freeze drying.

Drying of the sheet-like particulate may influence the structuring properties of the dried sheet-like particulate. Preferably, a freeze drying step is applied in step d), because in that case the viscosity of the fat phase comprising the sheet-like particulate may be higher than when using a method like drying of the sheet-like particulate in an oven. Furthermore, it was observed that the mixing time required to obtain a homogeneous dispersions of the sheet-like particulates in the fat phase are reduced when freeze drying is applied compared to oven-drying.

### Method for production of a bakery product

The invention also concerns a method for production of a bakery product comprising flour, fat and a sheet-like particulate comprising a lipophilic cellulose-based polymer comprising the steps:
a) providing sheet-like particulate comprising a lipophilic cellulose-based polymer,
   wherein the sheet-like particulate has a thickness z ranging from 0.1 to 2 micrometer, and a length y ranging from 20 micrometer to 2,000 micrometer, measured along the longest coplanar axis, and a width x ranging from 10 micrometer to 500 micrometer, measured perpendicular to the direction of the length y coplanar with the sheet-like particulate plane; and
b) dispersing the particular provided at step a) in a fat phase; and
c) bringing the mixture obtained from step b) into contact with one or more other ingredients of the bakery product.

Step a) a method suitable to provide the sheet-like particulate has been described herein before.

In step b) the fat phase, may be chosen from for example sunflower oil, palm oil, olive oil, rapeseed oil, or any other suitable oil or combinations of oils. The fat phase may be liquid at room temperature, or alternatively may be solid at room temperature, in which case the fat phase should be melted first by increasing the temperature.

In step b) the dispersion preferably is carried out by subjecting the mixture of the sheet-like particulate and the fat phase to high shear. This high shear can be created by methods common in the art. These methods include rotor-stator systems, e.g. the Ultra-Turrax^{®} (IKA Werke GmbH & Co. KG, Staufen, Germany), or a Silverson mixer (Silverson Machines Ltd., Chesham, Bucks, UK). Another method is high pressure homogenisation. An example of such a high pressure homogeniser is the Microfluidizer^{®} (Microfluidics International Corporation, MA-Newton, USA). Also sonication, a colloid mill, and a ball mill may be used to homogenise the mixture.

In case of a rotor-stator system, e.g. the Ultra-Turrax^{®}, the rotational speed preferably ranges from 1,000 to 30,000 rpm. The system is preferably homogenised during a period from 15 seconds to 60 minutes. In this way a homogeneous dispersion of sheet-like particulate in oil can be achieved.

Preferably the amount of sheet-like particulate to be added to the fat phase in step b) is between 0.01% and 50% by weight, preferably between 0.1 % and 40% by weight, more preferably between 0.2% and 25% by weight, still more preferably between 0.5% and 10% by weight, based on the amount of total fat. The dispersion fat phase and sheet-like particulate may be used as an ingredient of a food product as applicable. In that case it may be brought into contact with other ingredients of such product.

Some of the properties of the sheet-like particulates may be influenced by the zeta-potential of the sheet-like particulates. The zeta-potential is a measure for the surface charge of a colloidal particle, and determines whether particles attract or repulse each other. At a relatively high absolute value of the zeta-potential the ethylcellulose particles may be more easily dispersed, due to repulsion of the particles. Preferably the absolute value of the zeta-potential of the sheet-like particulate is more than 25 millivolt. The zeta potential values are measured as described in Jin et al., Super stable foams stabilized by colloidal ethyl cellulose particles. 2012 Soft Matter, vol. 8, pp. 2194-2205.

It was observed that the way of isolating the sheet-like particulate at step d) in the method as describe herein to make the particulates, may influence the structuring properties of the dried sheet-like particulate. In particular, dried sheet-like particulates obtainable by freeze drying may lead to a higher viscosity of the fat-phase and/or may reduce dispersion time with the fat phase. Preferably, the sheet-like particulate, used in the method for production of a bakery product, is isolated by a method as described herein, wherein the isolation at step d) is carried out by freeze-drying.

After the dispersion step the material obtained in step b) may need to be cooled, as the temperature may have risen due to the dispersion operation.

In step c) of the method according to the invention, the dispersion obtained from step b) is brought into contact with one or more other ingredients of the bakery product. In this way bakery products can be made which comprise the structured fat phase. The structured fat phase can be used in the manufacturing of the composition according to the invention in any method which is commonly used for preparing such product.

It will be appreciated that as long as a dispersion is obtained of the particulate in a fat phase, step b) and c) may be combined.

### DESCRIPTION OF FIGURES

*Figure 1**:* Schematic representation of the thickness z, length y, and width x used to define the dimensions of the sheet-like particulate of the invention (for illustration purposes). The upper picture is a cross-section of the sheet-like particulate, across the length y or the width x, and indicates that x and y are measured following the plane of the sheet-like particulate. The numeral '1' refers to the sheet-like particulate. The lower picture indicates that x and y are measured using the longest dimension, and perpendicular to each other.
*Figure 2**:* Schematic representation of the contact angle as defined herein. Droplet is dark, on the surface of a film. The contact angle as indicated is the angle in the droplet between the surface and the tangential line hitting the droplet.
*Figure 3**:* Schematic representation of the equipment used for preparation of sheet-like particulates in example 2.
*Figure 4**:* Images of sheet-like particulates prepared in example 2.

Top images: Micrographs made using optical light microscope of ethylcellulose sheet-like particulates from 7.5% ethylcellulose solution in acetone in a water suspension (at 20,000 rpm). The scale bars are equal to 50 micrometer (left) and 200 micrometer (right). Bottom images: Micrographs of ethyl cellulose sheets from 7.5 wt % in ethanol prepared in water suspension (at 5, 000 rpm). The scale bars are equal to 500 micrometer (left) and 50 micrometer (right).

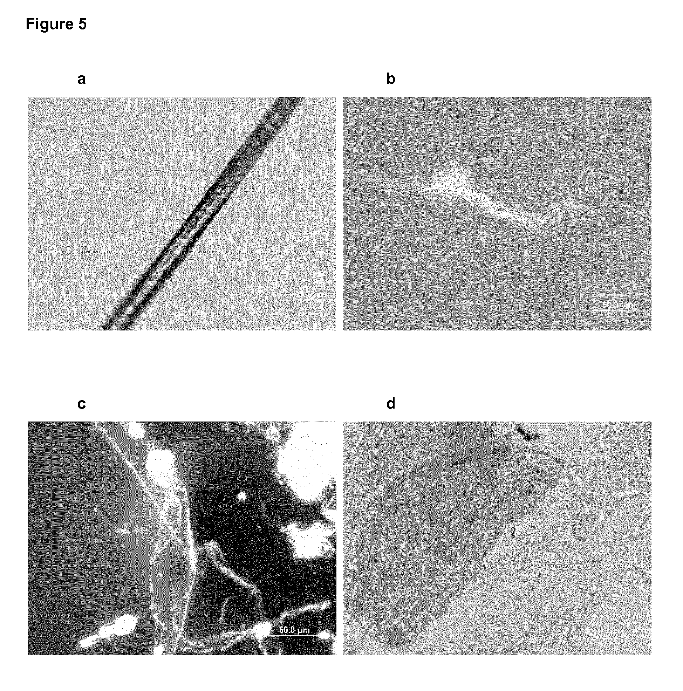

*Figure 5**.* Images of structures prepared with varying ethylcellulose concentrations, from example 2: a 2.5%, b 5%, c 12.5%, d 17.5%.

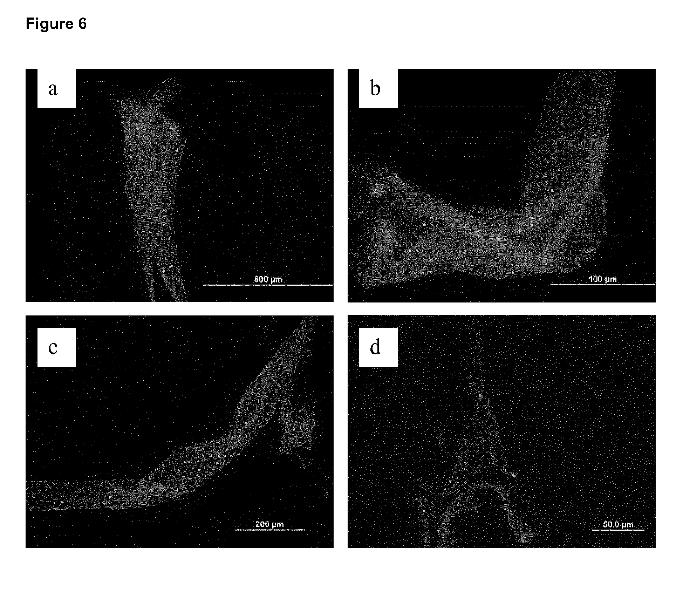

*Figure 6**:* Images of ethylcellulose N100 sheet-like particulates, prepared at different shear rates in example 2: a) 3,000 rpm, scale bar 500 micrometer; b) 5,000 rpm, scale bar 100 micrometer; c) 10,000 rpm, scale bar 200 micrometer; d) 20,000 rpm, scale bar 50 micrometer.

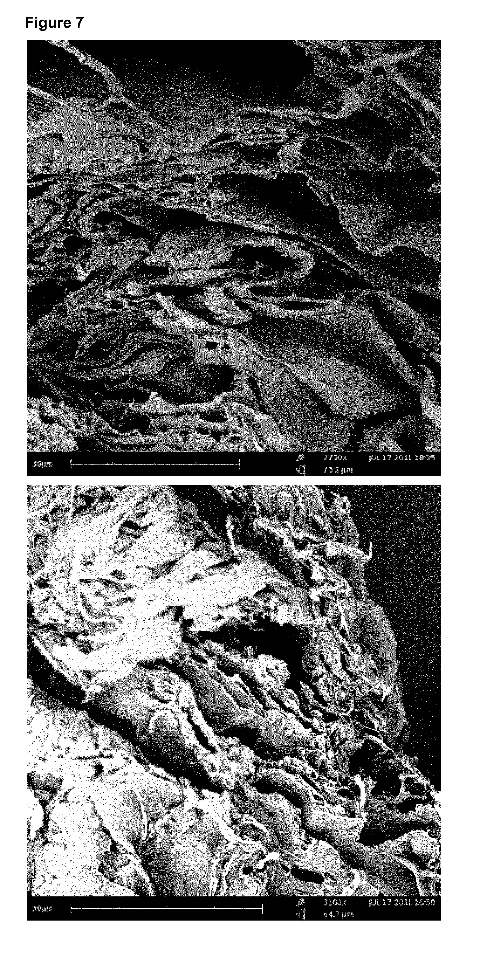

*Figure 7**:* Scanning electron microscopy images of dried sheet-like particulates, prepared at two gap sizes in example 2: top 180° gap, bottom 270° gap; bar size of both images 30 micrometer.

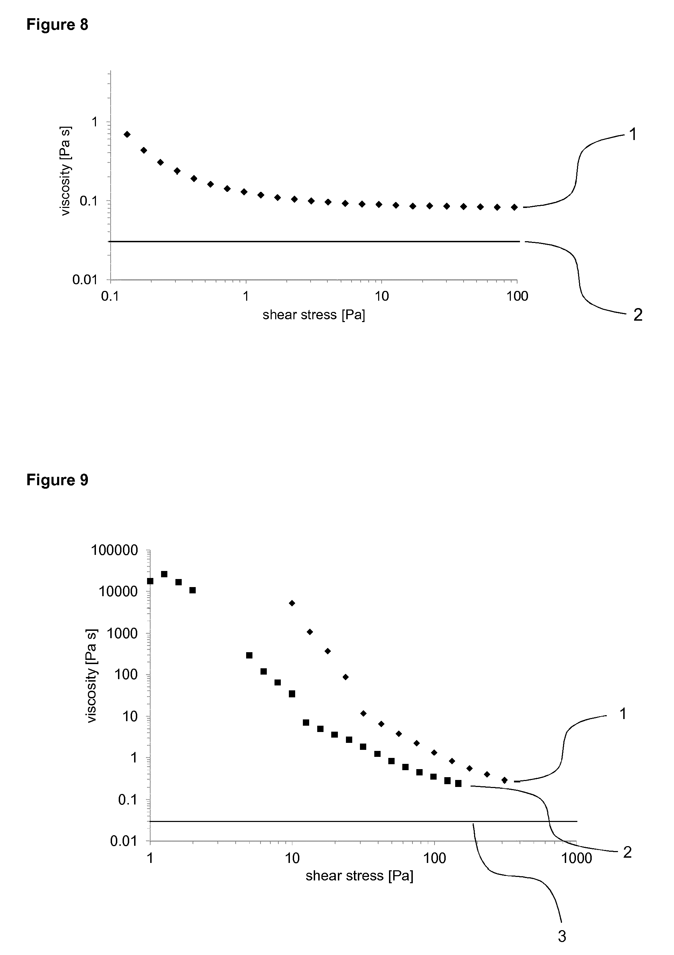

*Figure 8**:* Viscosity of 3.56 wt% ethylcellulose rods (1) added to soybean oil, compared to pure soybean oil (2), as function of shear stress.
*Figure 9**:* Viscosity of 2.55 wt % ethylcellulose sheet-like particulates (1) and 2.89 wt% ethylcellulose fibres (2) added to soybean oil, and pure pure soybean oil (3), as function of shear stress.

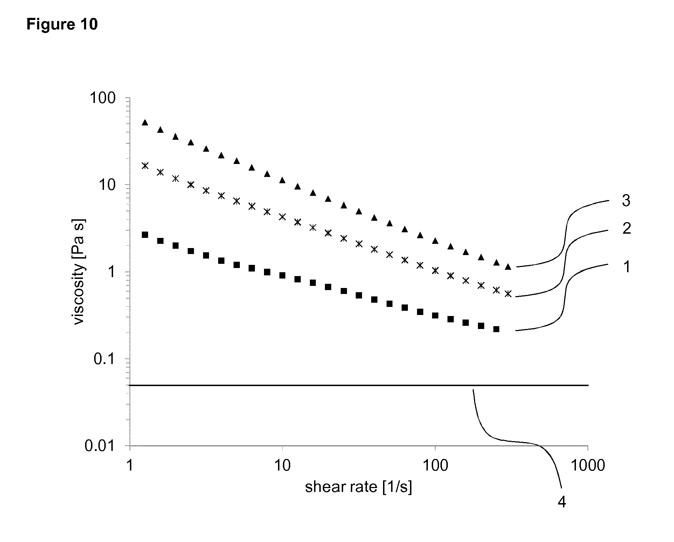

*Figure 10**:* Viscosity of sunflower oil structured with ethylcellulose sheet-like particulates, at 1 wt% (curve 1), 2 wt% (curve 2), 3 wt% (curve 3), and pure sunflower oil (curve 4), as function of shear rate.

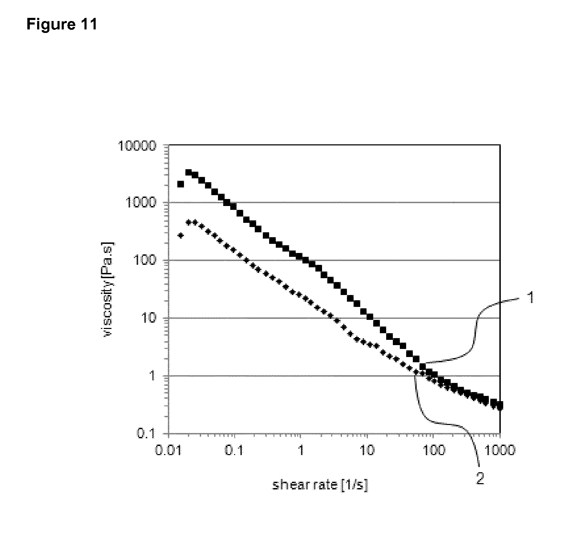

*Figure 11*: Viscosity (in Pa.s) as function of shear rate (in 1/s) of sunflower oil structured with 2.5 wt% ethylcellulose sheet-like particulates that is dried by freeze drying (curve 1), or oven dried (curve 2).

### EXAMPLES

The following non-limiting examples illustrate the present invention.

### Raw materials used:

● Ethylcellulose: Aqualon^{®} Ethylcellulose (type N200) was purchased from Ashland Inc. (Covington, Kentucky, USA). Mw about 200 kg/mol, ethoxyl content was 48.0-49.5%, and degree of substitution was 2.46-2.57. Viscosity was 150-250 mPa.s (at 5% and 25°C in 80/20 toluene/ethanol). Also type N100 was used, with ethoxyl content 48.0-49.5%, degree of substitution was 2.46-2.57, and viscosity was 80-105 mPa.s (at 5% and 25°C in 80/20 toluene/ethanol).
● Hypromellose phthalate HP-55 (hydroxypropyl methylcellulose phthalate), supplier Shin-Etsu Chemical Co., Ltd., (Tokyo, Japan).
● Acetone: supplied by Sigma-Aldrich Corp. (St. Louis, MO, USA).
● Ethanol (95%) supplied by Sigma-Aldrich Corp. (St. Louis, MO, USA).
● Sunflower oil (100%) bought at a local grocery.
● Soybean oil (100%): bought at a local grocery.
● Dimethicone: Polydimethylsiloxane, trademark & product name: PMX-200 Fluid, 50 cPs, molecular weight: 3,200; refractive index: 1.402, specific gravity: 0.960, manufacturer: Dow Corning (Midland MI, USA).
● Demineralised water was obtained from a Millipore filter system.

### Hardness

Hardness was measured at 20°C using TA XT Plus texture analyzer (Stable Microsystems, Surrey, UK) equipped with a knife edge probe (length 30 mm, width 20 mm, basement thickness 5 mm) using the following procedure:
- test mode: compression;
- test speed: 0.5 mm/s;
- post-test speed 10 mm/s;
- penetration distance: 5 mm.

### Rheology measurement of dough compositions

Rheological measurements were performed using an AR2000 rheometer (TA instruments, Newcastle, Delaware, US) with controlled temperature (20°C) and with a 20 mm diameter plate. (Geometry parallel-plate, oscillation procedure).The gap between the plates is maintained at 1000 µm.

To differentiate the strength of the dough samples, strain sweep measurements are performed from 0.002 to 100 strain %. The frequency is set to 1 Hz. Storage (elastic) G' modulus has been recorded.

### Example 1 - Measurement of Contact Angle

The contact angle of ethylcellulose was determined using a Drop shape analysis DSA100 (Krüss GmbH, Neunkirchen am Brand, Germany). In the present context, the contact angle is measured as the angle in the droplet of oil, as schematically depicted in Figure 2. The method applied was the following:
- dissolve ethylcellulose in a solvent to make homogenous solution;
- case a few drops of a solution onto a whole glass slide, under slowly spinning the glass slide to evenly spread the drops on the glass slide;
- dry, smooth and even film formed after solvent has evaporated;
- 5 microliter drop of demineralised sunflower oil or dimethicone is brought onto the surface, at ambient pressure, humidity and temperature;

Measured contact angles:
Sunflower oil - ethylcellulose film: 37°.
Dimethicone - ethylcellulose film 24°.

### Example 2 - Preparation of sheet-like particulates of ethylcellulose

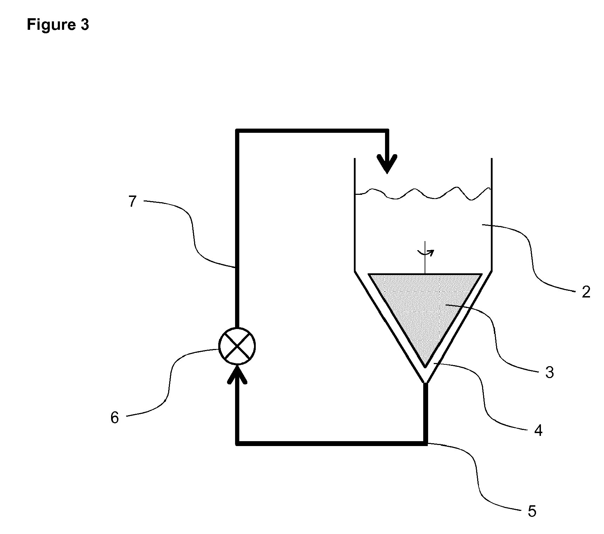

Sheet-like particulates have been prepared in a colloid mill which is schematically depicted in Figure 3. The equipment contains a liquid reservoir 2, and a rotating conical shape 3. The conical shape 3 forms a gap 4 with the confronting wall. Liquid is pumped from the reservoir 2 through the gap 4 to the recirculation pipe 5, via pump 6, and recirculation pipe 5 to the reservoir 2. The instrument used was an IKA® magic LAB® (supplier IKA®-Werke GmbH & Co. KG, Staufen, Germany), which contains two conical rotors, which can be rotated in opposite directions, causing friction and high shear rates. The gap between these two cones can be changed, as well as the rotation speed (in rpm). With a relatively small gap size and high rotation speed (for example 20,000 rpm), a high shear rate can be achieved.

### Variation of solvent and rotation speed

Experimental parameters: 350 mL anti-solvent (water), 3-5 mL ethylcellulose solution in solvent, gap between two conical rotors 180° (translating to 159 micrometer), all processes at room temperature.

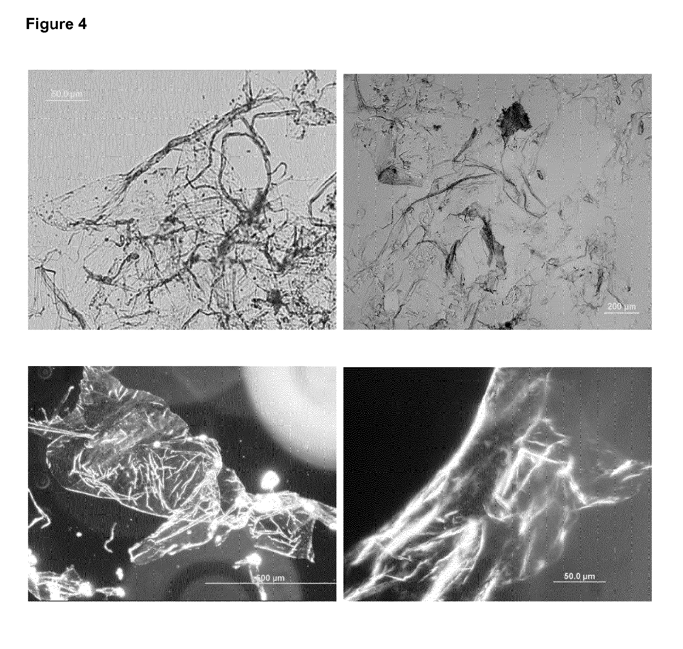

A solution of ethylcellulose N200 in acetone was prepared at a concentration of 7.5 wt%. The solution was injected into sheared media of demineralised water in reservoir 2 once the preset revolution rate of 20,000 rpm had been reached. The mill was run for approximately 5 minutes after all ethylcellulose had been injected, to recirculate the dispersion. The resulting sheets were in the form of a foamy surface layer on the water, which was collected and either dried or stored in vials. See Figure 4 top for pictures of obtained sheet-like particulates.

Similarly a solution of ethylcellulose N200 in ethanol was prepared at a concentration of 7.5 wt%, and prepared in the same way at a rotation speed of 5,000 rpm. See Figure 4 bottom for pictures of obtained sheet-like particulates.

### Variation of ethylcellulose concentration

Experimental parameters: 350 mL anti-solvent (water), 3-5 mL ethylcellulose solution in solvent, gap between two conical rotors 180° (translating to 159 micrometer), all processes at room temperature.

Solutions of ethylcellulose N100 in ethanol were prepared at concentrations of 2.5, 7.5, 12.5, and 17.5 wt%. The solution was injected into sheared media of demineralised water in reservoir 2 once the preset revolution rate of 20,000 rpm had been reached. The mill was run for approximately 5 minutes after all ethylcellulose had been injected, to recirculate the dispersion. The resulting structures were dependent on the concentration of ethylcellulose, as shown in Figure 5.

### Variation of rotation speed of colloid mill

Experimental parameters: 350 mL anti-solvent (water), 3-5 mL ethylcellulose solution in solvent, gap between two conical rotors 180° (translating to 159 micrometer), all processes at room temperature.

A solution of ethylcellulose N100 in ethanol was prepared at a concentration of 7.5 wt%. This solution was split in four parts, and these parts were processed in the colloid mill at four different rotation speeds: 3,000, 5,000, 10,000, and 20,000 rpm. In these four cases sheet-like structures were obtained, as shown in Figure 6.

### Variation of angle of gap of colloid mill

The angle of the gap between the two conical rotors was adjusted to 180° (translating to 159 micrometer), or to 270° (translating to 239 micrometer). Images of the materials obtained are shown in Figure 7. The materials are rather similar, hence the difference between the two gap sizes does not have a major influence on the final sheet-like particulate. Dimensions were determined using SEM microscopic images, and were determined to be as indicated in the following table:

**Table 1 Dimensions of sheet-like particulate as function of gap size.**

| *Gap angle* | *Average Thickness [micrometer]* | *Average Width [micrometer]* |
|---|---|---|
| 180° | 0.44 ± 0.088 | 9.6 ± 0.25 |
| 270° | 0.36 ± 0.091 | 12.5 ± 0.14 |

The number of measurements for the two gap widths were 30 and 15 sheet-like particulate, respectively, and averages were determined from these measurements.

### Example 3 - Structuring of vegetable oil using sheet-like particulates of ethylcellulose

The sheet-like particulates from example 2 (as described under 'Variation of solvent and rotation speed', produced at 20,000 rpm) have been used to structure sunflower oil or soybean oil. After the sheet-like particulates were dried, they were added to vegetable oil in low weight percent dispersions. The polymer and oil were vigorously stirred for a 24 hour period at room temperature. Upon complete mixing (dispersion) of the sheet-like structures in the oil, the mixtures became highly viscous, and exact viscosities were measured via rheology. When comparing sheet-like particulates to ethylcellulose rods, ethylcellulose fibers and ethylcellulose particles, it was found that sheet-like particulates required a lower weight percent to increase oil viscosity than rods, fibers or particles. Rods were defined as having an aspect ratio length over diameter (L/d) equal to or smaller than 20. Fibres were defined as having an aspect ratio length over diameter (L/d) of larger than 20. Ethylcellulose particles are nanoparticles that were obtained by precipitation of ethylcellulose N200 polymer solution in acetone by adding equal volume of antisolvent water and using a magnetic stirrer instead (similarly as described in WO 2010/121490 A1). The average particle diameter of these particles ranged from about 170 to about 200 nanometer.

Rheological analysis was performed in a controlled stress rheometer (AR-2000 Rheometer, TA Instruments, New Castle, Delaware, USA; with parallel plate 40mm, the gap used was 1000 micrometer, at room temperature 25°C). The results of the rheology tests are shown in Figure 8, Figure 9, and Figure 10. Figure 8 shows the viscosity of rods in soybean oil as function of the shear stress, compared to pure soybean oil. The rods were mixed with the soybean oil at a concentration of 3.56% by weight. This shows that the viscosity decreases when the shear stress increases. Figure 9 shows the viscosity of sunflower oil and sunflower oil to which ethylcellulose fibres (2.89% by weight) or ethylcellulose sheet-like particulates (2.55% by weight) are added. A clear trend was established, with sheet-like particulates thickening oil more than fibres, fibres more than rods, and all three structures thickening oil much more than individual ethylcellulose particles at comparable volume structures. The sheet-like particulates are the best oil thickeners, creating highly viscous oils with low weight percent concentration of ethylcellulose. In all cases the measured viscosity of the structured oils decreased with increasing shear stress or shear rate.

Figure 10 shows the effect of the concentration of sheet-like particulates (1 %, 2%, and 3% by weight, respectively) on the viscosity of sunflower oil. This graph shows that with each 1% of sheet-like particulates, the viscosity increases by roughly an order of magnitude.

Figure 11 shows the viscosity (in Pa.s) as function of shear rate (in 1/s) of sunflower oil structured with 2.5 wt% ethylcellulose sheet-like particulates. The sheet-like particulates are made from ethylcellulose N100 as described in example 2. Part of the obtained sheet-like particulates was freeze dried at pressure of 0.01 mbar at -85°C, during one day. The other part was dried in an oven at 45°C during two days. The dried sheet-like particulates were mixed with sunflower oil, by using an Ultra Turrax mixer (IKA®-Werke GmbH & Co. KG, Staufen, Germany) at rotation speed of 6,500 rpm at room temperature. Due to the mixing process the temperature of the oil increased up to 30°C. Mixing time required to obtain a homogeneous mixture for the freeze-dried sheet-like particulates was 2 to 5 minutes. For the oven-dried sheet-like particulates, the required mixing time was 5 to 15 minutes.

Rheology was determined using a rheometer (Anton Paar, Physica MCR501, Austria) with a parallel-plate (PP 25), at room temperature). Figure 11 curve 1 shows sunflower oil structured by freeze dried sheet-like particulates, and curve 2 sunflower oil structured by oven dried sheet-like particulates. This shows that the viscosity of sunflower oil structured by freeze dried sheet-like particulates is higher than the oven-dried sheet-like particulates.

### Example 4 - Preparation of cookies based on fibre structured oils

Dough was prepared as follows: 50 g of crystal sugar (Van Gilse) was hand-mixed with 150 g of all-purpose wheat flour (Albert Heijn) and 100 g of (structured) sunflower oil or butterfat. Resulting dough was shaped in a roll using a sheet of baking paper, cut into pieces, which were then put on flat trays covered with another sheet of baking paper. Cookies were baked for 20 min at 160°C in a Palux GXB Injection Hot-Air Steamer. After that the trays with baked cookies were left at ambient conditions, cookies were removed from trays upon cooling to ambient and used for subsequent rheological and hardness measurements.

Butterfat was used as a benchmark fat phase (example I). Unstructured sunflower oil was used as fat phase in a negative benchmark (example II). In examples III and IV the fat phase consisted of sunflower oil with 1,4% respectively 4% of ethylcellulose powder and used as negative control. In examples V and VI sunflower oil was structured with 2% or 4% the sheet-like particulate comprising ethylcellulose from example 2 (as described under 'Variation of solvent and rotation speed', produced at 20,000 rpm).

The fibre structured sunflower oil in examples V and VI was prepared according to the method in example 3.

Fat phases in examples III and IV were prepared by adding the powder to the oil and homogenising by means of an Ultra-Turrax for 5 minutes at 10,000 rpm.

It was noticed that it took considerably more effort to get a homogeneous dough from the butter recipe than from the other recipes. From the dough based on pure sunflower oil or sunflower oil with EC powder oil exudation could be observed.

Hardness was measured and a minimum of 4 measurements was taken for the negative controls and a minimum of 8 measurements was taken for all other samples.

It was observed that the dough from examples II to IV did not maintain shape during the baking process. The dough prepared with sheet-like granulates comprising ethylcellulose, either at 2% or at 4% level, maintained shape at a level equivalent to the butter benchmark.

The firmness of the dough was established with the herein mentioned method for rheology measurement of dough compositions. It was observed that dough from examples II, III and IV were lacking all firmness. It was also observed that the dough from example I had less firmness than the sheet-like particulate based examples V and VI. This shows that the sheet-like particulate structured doughs maintain shape better than butter based dough.

This shows that it is possible to replace butter in the cookie recipe by oil structured with the sheet-like particulates according to the invention, and achieve the quality of the butter benchmark, whilst at the same time getting a significant reduction in the saturated fat level (Table 2).

**Table 2**

| **Sample** | **I** | **II** | **III** | **IV** | **V** | **VI** |
|---|---|---|---|---|---|---|
| Sugar | 16.7% | 16.7% | 16.7% | 16.7% | 16.7% | 16.7% |
| Flour | 50% | 50% | 50% | 50% | 50% | 50% |
| Butter | 33.3% | - | - | - | - | - |
| Oil | - | 33.3% | 31.9% | 29.3% | 31.3% | 29.3% |
| EC powder | - | - | 1.4% | 4% | - | - |
| Sheet-like particulate | - | - | - | - | 2% | 4% |
| Saturated fat | 21.3% | 3.2% | 3.0% | 2.8% | 3.0% | 2.8% |
| Hardness | 6.9 | 0.5 | 0.3 | 0.3 | 4.5 | 7.8 |

## Claims

1. Dough composition comprising from 1 to 95% by weight of flour and further comprising a fat phase and a sheet-like particulate comprising a lipophilic cellulose-based polymer, wherein the sheet-like particulate has a thickness z ranging from 0.1 to 2 micrometer, and a length y ranging from 20 micrometer to 2,000 micrometer, measured along the longest coplanar axis, and a width x ranging from 10 micrometer to 500 micrometer, measured perpendicular to the direction of the length y coplanar with the sheet-like particulate plane.

2. Dough composition according to claim 1 comprising 5 to 70% by weight of flour, 5 to 60% by weight of fat phase, and 0.01 to 50% by weight of fat phase of the sheet-like particulate, preferably further comprising 1 to 40% by weight of water.

3. Bakery product comprising a dough composition according to claim 2 or 3, preferably the bakery product is a cookie, sponge cake, cup cake, biscuit, brownie, pastry or short bread type bakery product.

4. Composition according to any one of claims 1 to 3, wherein the fat phase is selected from the group consisting of oil of vegetable origin, oil of dairy origin, oil of marine origin, oil of algae origin and mixtures thereof.

5. Composition according to any of claims 1 to 4, wherein the fat phase comprises less than 50 wt%, based on total fat, of saturated fatty acids, more preferably less than 40 wt%, even more preferably less than 30 wt%, still more preferably less than 20 wt% and still even more preferably less than 10 wt%.

6. Composition according to any of claims 1 to 5, wherein the fat phase comprises at least 50 wt%, based on total fat, more preferably at least 75 wt%, even more preferably 95 wt% of one or more natural fats; and still even more preferably essentially consists of one or more natural fats.

7. Composition according to any of claims 1 to 6, wherein the concentration of sheet-like particulate is between 0.01 % and 50% by weight, preferably between 0.1 % and 40% by weight, more preferably 0.2% and 25% by weight and even more preferably between 0.5% and 10% by weight, based on amount of total fat.

8. Composition according to any of claims 1 to 7, wherein the lipophilic cellulose-based polymer comprises an alkylated cellulose ether, more preferably an alkylated cellulose ether selected form the list consisting of methyl-ethylcellulose, ethylcellulose, propylcellulose, butylcellulose and combinations thereof; and even more preferably ethylcellulose.

9. Composition according to any of claims 1 to 8, wherein the thickness z of the sheet-like particulates ranges from 0.2 to 1.5 micrometer, and/or the length y ranges from 100 micrometer to 600 micrometer, and/or the width x ranges from 50 micrometer to 250 micrometer.

10. Composition according to any one of claims 1 to 9, wherein the lipophilic cellulose based polymer comprised by the sheet-like particulate is such that the three-phase contact angle between sunflower oil, and a film of the lipophilic cellulose-based polymer, and air is less than 70° at 20°C, preferably less than 50° and more preferably less than 40°.

11. Method for production of a bakery product comprising flour, fat and a sheet-like particulate comprising a lipophilic cellulose-based polymer comprising the steps:
a) providing sheet-like particulate comprising a lipophilic cellulose-based polymer,
wherein the sheet-like particulate has a thickness z ranging from 0.1 to 2 micrometer,
and a length y ranging from 20 micrometer to 2,000 micrometer, measured along the longest coplanar axis, and a width x ranging from 10 micrometer to 500 micrometer, measured perpendicular to the direction of the length y coplanar with the sheet-like particulate plane; and
b) dispersing the particular provided at step a) in a fat phase; and
c) bringing the mixture obtained from step b) into contact with one or more other ingredients of the bakery product.

12. A method according to claim 11, wherein the lipophilic cellulose-based polymer comprises ethylcellulose.

13. Use of a composition according to any one of claims 1 to 12 to prepare a bakery product, preferably a bakery product comprising less than 25% by weight of saturated fatty acid, more preferably less than 20% by weight of saturated fatty acid and even more preferably less than 15% by weight of saturated fatty acid.
